# FASCICULE DE BREVET EUROPEEN

(11) **EP 1 810 883 B1**
(45) Date de publication et mention de la délivrance du brevet: **19.08.2009**
(21) Numéro de dépôt: 06290142.6
(22) Date de dépôt: 19.01.2006
(51) Int. Cl.: B60R 3/02, A61G 3/06, B61D 23/02

(54) **Dispositif de réduction de lacune entre un quai et un véhicule**
Vorrichtung zum reduzieren des Abstands zwischen einem Fahrzeug und dem Steig
Device for reducing the space between a vehicle and the platform

(43) Date de publication de la demande: 25.07.2007
(73) Titulaire: Siemens Transportation Systems S.A.S., 92542 Montrouge (FR)
(72) Inventeur: Ammeux, Francois, 59130 Groulois (FR)
(74) Mandataire: Fischer, Michael

(56) Documents cités:
- DE-U1- 9 401 755
- US-A- 2 925 876
- US-A- 5 538 265
- US-A- 5 584 493

## Description

La présente invention concerne un dispositif de réduction de lacune entre un quai et un véhicule selon le préambule de la revendication 1.

Plusieurs systèmes sont bien connus tels US5584493, US 5538265, US2925876 présentant des dis-positifs embarqués sur un véhicule au niveau d'un accès dudit véhicule et comprenant au moins une marche d'un escalier déployable par un moyen pneumatique vers l'extérieur du véhicule.

Lors de l'approche d'un véhicule le long d'un quai (ou trottoir), il persiste souvent des espacements ici nommés lacune, ainsi qu'un écart vertical entre quai et plancher de véhicule, qui peuvent rendre difficile l'accès par exemple d'une personne en fauteuil roulant, d'une poussette pour bébé, d'un chariot, etc à bord du véhicule depuis le quai et vice-versa.

Des dispositifs pour résoudre ces problèmes sont connus. Ils consistent en :
a) Sur les autobus, des palettes rétractables ou amovibles, de relativement grandes dimensions, de l'ordre de 1 m x 1 m. Ces palettes permettent l'embarquement des usagers en fauteuil roulant depuis le niveau d'un trottoir, même très bas, mais présentent de nombreux inconvénients :
   - le temps de déploiement est de l'ordre de la minute. La manoeuvre n'est donc pas systématique à tous les arrêts. Elle se fait sur demande de l'usager, avec des temps morts et les aléas que cela comporte ;
   - le déploiement n'est pas possible sur un quai à hauteur voisine de celle du plancher du véhicule. Un quai relati
   - vement bas est donc imposé, ce qui handicape les autres usagers ;
   - le déploiement de la palette peut être rendu impossible par des obstacles sur le quai ;
   - la complexité de la mécanique conduit à une fiabilité médiocre, ceci étant aggravé par le fait que le mécanisme peut rester longtemps inutilisé ;
   - l'encombrement important de la palette peut rendre son logement difficile dans le véhicule.
b) Sur les tramways et quelques métros, des palettes déployables de petite dimension c'est-à-dire de 3 à 15 cm de large. Ces palettes présentent les inconvénients suivants :
   - soit elles n'ont qu'un déplacement horizontal, et elles ne compensent pas l'écart vertical ;
   - soit elles se rabattent sur le quai, mais celui-ci doit alors être nettement plus bas que le plancher du véhicule, d'où une gêne pour les autres usagers.

Un tel système est décrit au travers du document EP0913307A1. le document sert de base pour le préambule de la revendiation 1 et propose un dispositif de réduction de lacune entre un quai et un véhicule comprenant une surface d'accès au quai disposée latéralement au dit véhicule. Un moyen de déploiement pneumatique, disposé sous la surface d'accès au véhicule, interagit avec un élément de basculement. Le moyen de déploiement pneumatique comprend au moins un vérin souple longeant idéalement l'accès au véhicule. Sous effet du déploiement, l'élément de basculement entraîne à son extrémité supérieure une plate-forme (palette) horizontale hors du châssis vers le quai.

Des systèmes d'approche par déploiement depuis le quai vers un accès du véhicule demande également de la précision, restent donc chers et sont souvent voués à une usure raphide par le frottement avec des parties du véhicule en accostage. Ils sont également lents pour éviter les chocs sur le véhicule, ce qui augmente significativement le temps d'arrêt d'un autobus par exemple. Ceci est particulièrement le cas pour un dispositif à palette à motions successives horizontale et verticale aidant l'accès aux personnes handicapées, une fois cependant qu'elles sont parvenues, au risque de la lacune restante, sur le dispositif pour une montée par exemple.

En particulier, la loi du 11 Février 2005 en France portant, entre autres, sur l'accessibilité des transports publics vient renforcer le besoin d'amélioration effective de l'accessibilité par exemple pour les autobus.

Un but de la présente invention est donc de proposer un dispositif effectif pour améliorer l'accessibilité entre un quai et un véhicule. Il serait aussi préférable de proposer, entre autres, un dispositif simple, fiable et rapidement utilisable.

Cet objectif peut être atteint à partir d'un dispositif de réduction de lacune entre un quai (sol, trottoir, etc) et un véhicule (terrestre, naval et/ou aérien (voire spatial) au sol tel que par exemple une automobile, une remorque, un camion, un autobus, un wagon ou voiture de train/métro/tramway, un bateau ou un avion) comprenant une surface d'accès au quai (surface plane comme un plancher, une surface inclinée, une marche d'escalier/palette, etc) d'accès disposée latéralement au dit véhicule, A l'aide d'un moyen de déploiement pneumatique, disposé sous l'accès au véhicule, qui interagit avec un élément de basculement qui, en position de basculement, sert de passerelle entre la surface d'accès et le quai, une lacune restante peut être avantageusement comblée de façon simple (car utilisation de peu d'éléments) et effective (car déploiement et basculement permet de réduire la lacune à zéro cm horizontalement et de créer une rampe non bloquante pour les roues verticalement).

Dans le cas des lacunes inférieures à 20 cm, le système peut ainsi être simplement fixé/rajouté au véhicule (et non au quai), ce qui le rend facile et universel à installer sur des véhicules actuellement en service. Il est aussi facile d'accès, rapidement démontable voire interchangeable et facile à entretenir en cas de maintenance.
Dans le cas des lacunes supérieures à 20 cm, le système peut être fixé au quai ou toute surface de débarquement stable. Le nombre de pièces mécaniques utilisées reste minimal, ce qui rend le dispositif très simple, donc fiable. Un volume réduit du dispositif permet aussi d'intégrer celui-ci aisément au niveau inférieur de l'accès au véhicule, même pour des véhicules à plancher bas ou dont la hauteur de plancher est aussi (séparément du présent dispositif) régulé en hauteur pour diminuer un effet de marche trop important entre le quai et le véhicule.

La durée de déploiement ou de rétraction est inférieure à 2 ou 3 secondes, donc rapide lors d'un arrêt ou un départ de bus par exemple. La durée actuelle de montée ou de descente des passagers entre véhicule et quai est également inchangée, car la courte durée de déploiement/rétraction peut être incluse (« masquée ») dans la durée d'ouverture ou de fermeture des portes d'accès du véhicule. Le déploiement peut donc être systématique à chaque ouverture des portes indépendamment de la présence d'UFR ou autres personnes à mobilité réduite.

Les matériaux utilisés sont choisis en adéquation avec le nombre élevé de déploiements/rétractions systématiques et fréquents afin de garantir la durée de vie des éléments du dispositif soumis aux frottements. Ces frottements entre éléments mécaniques sont minimisés par le choix des matériaux. Des surfaces de frottement peuvent être également recouvertes de Téflon®, afin de minimiser les frottements. Des matériaux ou/et revêtements résistants sont utilisés pour le moyen de déploiement pneumatique (comme un ou plusieurs sortes d'élastomère) et l'élément de basculement (comme du néoprène renforcé). De même, au moins une surface de l'élément de basculement possède des propriétés permettant une bonne adhérence au passage sur la passerelle (c'est-à-dire en position déployée du dispositif) de passagers et/ou objets.

Un ensemble de sous-revendications présente également des avantages considérables de l'invention.

En particulier, le moyen de déploiement pneumatique peut comprendre au moins un vérin souple comme une membrane gonflable, extensible ou non, qui longe idéalement l'accès au véhicule. Les matériaux non extensibles pour le vérin sont cependant trop rigides et donc peu aptes à être gonflés facilement et rapidement. A l'inverse, un matériau très déformable (néoprène, caoutchouc...) peut être trop fragile et donc posséder une durée de vie trop limitée pour des utilisation systématiques. L'ajout d'armature sur/dans le matériau peut présenter une voie d'amélioration, mais au prix d'une manufacture plus complexe du vérin.

C'est pourquoi le moyen de déploiement pneumatique peut également comprendre au moins deux vérins souples disposés latéralement sous l'accès au véhicule et longeant chacun idéalement l'accès au véhicule. Ceci permet d'utiliser pour chaque vérin un matériau usuel de manufacture et par exemple extensible/déformable tout en assurant une durée de vie adaptée au dispositif à déploiements fréquents.

L'élément de basculement peut être une partie rigidifiée du moyen de déploiement pneumatique, c'est-à-dire par exemple un revêtement rigide d'une des surfaces du vérin souple qui lors du déploiement, donc par basculement lors du gonflage du vérin du vérin, vient obturer la lacune et jouer le rôle de passerelle entre le quai et l'accès au véhicule. La partie rigidifiée peut aussi être une série d'armatures peu déformables accolées à la surface externe du vérin souple.

L'élément de basculement peut aussi être un élément séparé du vérin souple. Il comprend alors au moins un volet ou une bavette muni d'un axe de rotation longeant idéalement l'accès au véhicule. Par gonflage du vérin, une pression est alors appliquée sur le volet qui vient donc par rotation à basculer jusqu'à ce que son extrémité libre arrive en contact avec la bordure du quai. La lacune est alors comblée.

Le présent dispositif ou du moins le moyen de déploiement pneumatique peut être également encastrable dans un boîtier dont l'élément de basculement (par exemple le volet rotatif) forme idéalement selon l'état de déploiement une façade de fermeture ou d'ouverture du boîtier ainsi constitué. Le moyen de déploiement pneumatique et l'élément de basculement peuvent donc être intégrés dans ou eux-mêmes constituer un module partiellement hermétique, évitant en particulier toute introduction d'élément externes en position rétractée du dispositif (lors du déplacement du véhicule entre les arrêts à quai). Bien entendu, le moyen de déploiement pneumatique et l'élément de basculement peuvent aussi être intégrés dans ou eux-mêmes constituer un module hermétique, évitant ainsi en particulier toute introduction d'élément externes indépendamment de la position du dispositif. Ceci peut être réalisé par un simple ajout de moyens d'étanchéité déployables comme un soufflet clôturant une surface à ouverture de dimension variable. Egalement, un vérin souple peut aussi être simplement fixé directement sous le plancher au niveau de l'accès au véhicule et comprendre une seule face déformable en direction latérale pour activer le basculement du volet. Un boîtier supplémentaire ou un système-boîtier constitué par le moyen de déploiement et l'élément de basculement eux-mêmes sont donc possibles à réaliser, et permettent de protéger le dispositif contre des facteurs externes ou de faciliter l'installation du dispositif.

Non représenté graphiquement dans la présente invention, le moyen de déploiement pneumatique est contrôlé par des électrovannes permettant un gonflage et dégonflage du dit moyen. En particulier, les électrovannes assurent une durée minimale de gonflage et dégonflage. De plus, le moyen déploiement pneumatique est alors soumis à une pression minimale pour assurer une portance exigée en mode déployé (la passerelle doit être maintenue stable contre le quai) et, pendant le déploiement, à une pression maximale de sécurité pour éviter une quelconque blessure par inadvertance, par exemple d'un membre d'une personne placé entre le quai et le véhicule peu avant le déploiement du dispositif.

Le moyen de déploiement pneumatique s'étend idéalement sur une longueur supérieure ou égale à 50cm le long de l'accès au véhicule. Cette longueur est bien entendu fonction de la largeur d'accès et de la cinématique de gonflage du vérin souple utilisé. Dans cette perspective, plusieurs vérins souples peuvent aussi être placés bout à bout le long de l'accès au véhicule.

Par ce biais, le moyen déploiement pneumatique permet une réduction de lacune latérale et/ou verticale de quelques centimètres entre le quai et l'accès au véhicule. Il est aussi possible, au prix de plus de complexité, de coupler le moyen déploiement pneumatique à des capteurs de contrôle de déploiement. Ces capteurs peuvent être optiques ou tactiles afin de mieux estimer l'ampleur ou l'emplacement de la lacune à réduire. Ces capteurs peuvent être disposés sur le véhicule ou sur le quai.

L'amplitude de déploiement peut être aisément régulé par des électrovannes et dépendre de pressions de seuils pour éviter tout accident comme un pincement de membre d'un usager entre le quai et le véhicule. Du fait que le déploiement peut être régulé en pression, des lacunes de tailles différentes peuvent être comblées entièrement. Ce qui apporte une flexibilité accrue de dimensionnement du dispositif comble-lacune en particulier pour des véhicules dont la distance avec le quai peut varier entre des arrimages successifs. C'est le cas des autobus ou des bateaux.

Par la présente invention il est ainsi possible d'utiliser le dispositif comme passerelle d'appoint entre un quai et un véhicule terrestre, naval et/ou aérien au sol tel que par exemple une automobile, une remorque, un camion, un autobus, un wagon ou voiture de train/tramway, un bateau ou un avion. L'invention est bien entendu non restrictive sur le type de véhicule, mais aussi sur le type de quai. Ainsi, il serait tout à fait possible d'utiliser ce dispositif pour des chariots à charger/décharger sur une ligne automatisée de transports de marchandises.

Le véhicule peut aussi interagir avec un système de guidage du véhicule par rapport au quai, afin d'améliorer un premier positionnement de celui-ci par rapport au quai et de garantir ainsi une dimension adaptée au présent dispositif pour une lacune restante.

Des exemples de réalisation et d'application sont fournis à l'aide de figures décrites :
- Figure 1: un premier dispositif avec un moyen de déploiement à membrane,
- Figure 2: un deuxième dispositif à moyens de déploiement étagés en position rétractée,
- Figure 3: le deuxième dispositif à moyens de déploiement étagés en position déployée,
- Figure 4: un troisième dispositif à moyens de déploiement étagés avec passerelle intégrée.

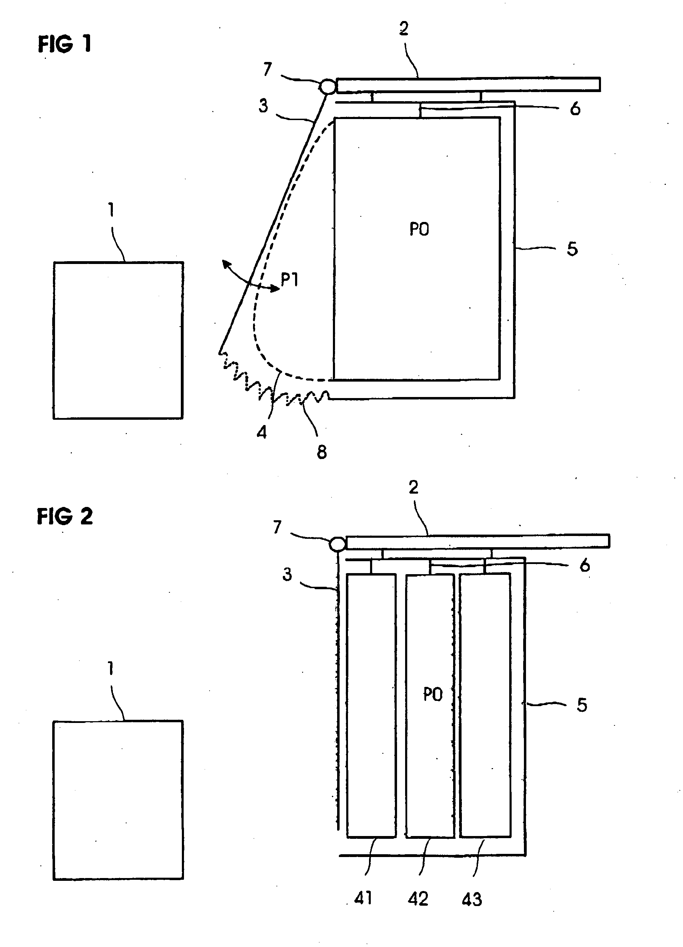

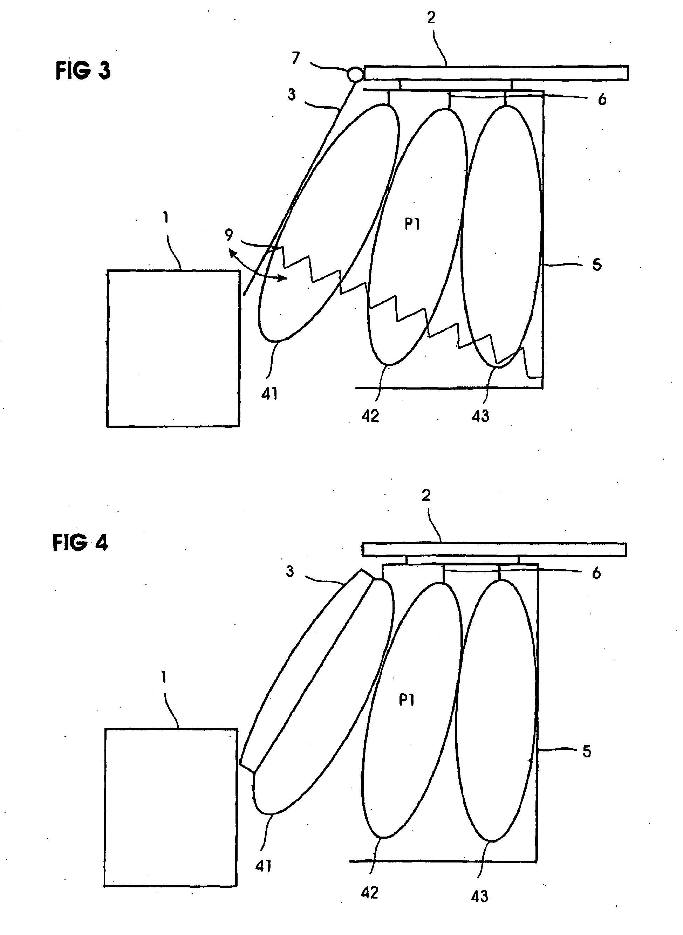

Figure 1 représente un premier dispositif avec un moyen de déploiement 4 à membrane souple.
Ce dispositif permet donc une réduction de lacune entre un quai 1 et un véhicule comprenant une surface d'accès 2 (plancher du véhicule) au quai 1 disposée latéralement au dit véhicule. Le moyen de déploiement pneumatique 4, disposé sous la surface d'accès 2 au véhicule, interagit avec un élément de basculement 3 (volet rotatif) qui, en position de basculement (voir flèche de rotation), sert de passerelle entre la surface d'accès et le quai. Ici, le moyen de déploiement pneumatique 4 comprend un seul vérin souple 4 longeant idéalement l'accès au véhicule. En position rétractée du vérin 4, une pression interne P0 est appliquée permettant à la partie représentée en pointillé de venir se loger dans le périmètre d'un socle-boîtier 5 fixé sous le plancher 2 du véhicule. Comme il le sera mieux décrit à la figure 3, l'utilisation d'au moins un ressort de rappel, reliant le volet 3 au socle-boîtier 5, permet une rétraction plus rapide quand la pression interne P0 est égale à la pression atmosphérique. En outre, celui-ci impose une limitation de déploiement qui maintient l'angle de la passerelle à une valeur compatible avec un faible risque de glissement lorsque le volet 3 n'est pas en butée sur le quai. Enfin, le ou les ressorts sont requis pour réduire les contraintes au niveau de plis du ou des vérins et évite également un affaissement du à l'appui d'un ou plusieurs passagers ou objets. Le vérin 4 est alors fixé au socle-boîtier 5 en un point 6. Ce socle- boîtier 5 est optionnel pour l'invention, mais apporte une meilleure protection au dispositif, ainsi qu'un point de butée latéral pour le vérin qui est ainsi arrêté sur un de ses côtés, à l'inverse de l'autre qui vient activer le volet rotatif 3 dont l'axe de rotation 7 est placé par exemple directement au niveau du bord du plancher 2 du véhicule. En position de gonflage du vérin 4 sous une pression accrue P1, la surface en pointillé s'étend et vient pousser le volet 3 contre le quai 1. En position finale de déploiement, le volet 3 est en contact ou/et en appui sur une paroi du quai 1.
Un élément d'étanchéité 8 comme une membrane à soufflet vient fermer l'espacement variable entre l'extrémité libre du volet 3 et la partie inférieure du vérin 4, de façon à éviter que des objets externes tels que des cailloux viennent se loger dans le dispositif, restant ainsi hermétique. Cette configuration permet de protéger le dispositif contre tout facteur externe quelque soit la position du dispositif. En pratique, il importe surtout de protéger le dispositif contre ces facteurs externes lors du déplacement du véhicule, donc en position rétractée. Le soufflet 8 est donc un élément facultatif, tant que le volet 3 vient au moins fermer le dispositif en position rétractée. Une électrovanne pour réguler la pression interne P0, P1 dans le vérin 4 n'est pas représentée pour simplifier la figure. Un côté fixe (composé d'au moins un point 6) sur lequel le vérin 4 est maintenu, doit être rigidement fixé au plancher afin de reprendre les efforts de mise en pression du vérin 4 et les charges appliquées sur le volet 3 par les passagers ou objets.

La figure 2 représente un deuxième dispositif à moyens de déploiement étagés en position rétractée (pression interne de vérin P0). Le principe de déploiement/rétraction du dispositif est identique à celui de la figure 1. Ici, trois vérins 41, 42, 43 souples sont disposés côte à côte sous le plancher 2 en direction du quai 1. L'usage de plusieurs vérins ainsi disposés permet de choisir des vérins dont les matériaux sont plus usuels et mieux adaptés à notre invention. L'élément d'étanchéité 8 n'est plus représenté, mais pourrait être bien entendu utilisé.

La figure 3 représente le deuxième dispositif à moyens de déploiement étagés en position déployée (pression interne de vérin P1). A la manière du vérin 4 de la figure 1, les trois vérins 41, 42, 43 sont pressurisés et par l'action de leur déformation poussent le volet 3 contre le quai 1, qui donc permet de jouer le rôle de passerelle d'appoint avec le véhicule. Pour la rétraction du volet ou le maintien général du volet contre le vérin souple 41, un ressort 9 est prévu qui relie le volet 3 à un point fixe sous le plancher 2 du véhicule.

Il est préférable que la partie du volet 3 en contact avec le quai 1 soit souple pour éviter le poinçonnement du quai 1, et résistante pour supporter l'usure lors des mouvements verticaux résiduels du plancher 2 du véhicule et du volet 3 lors de la montée/descente des passagers.

La figure 4 représente un troisième dispositif à moyens de déploiement étagés avec passerelle intégrée 3 à la place du volet 3 des précédentes figures 1, 2, 3. La surface du vérin 41 la plus proche du quai est donc ici rigidifiée par un revêtement ou des armatures qui permettent d'utiliser cette même surface comme par exemple passerelle stable (et antidérapante) pour les passagers d'un autobus.

### Liste d'abréviations

- 1: quai
- 2: surface d'accès au véhicule
- 3: élément de basculement (ex : volet)
- 4, 41, 42, 43: membrane/vérin pneumatique
- 5: boîtier/support
- 6: élément de fixation
- 7: axe de rotation
- 8: membrane d'étanchéité
- 9: ressort
- P0, P1: pression interne à membrane/vérin pneumatique

## Revendications

1. Dispositif de réduction de lacune entre un quai (1) et un véhicule comprenant une surface d'accès (2) au quai (1) disposée latéralement au dit véhicule,
un moyen de déploiement pneumatique (4, 41, 42, 43), disposé sous la surface d'accès (2) au véhicule, interagit avec un élément de basculement (3),
le moyen de déploiement pneumatique (4, 41, 42, 43) comprend au moins un vérin souple longeant idéalement l'accès au véhicule,
l'élément de basculement (3), en position de basculement, sert de passerelle entre la surface d'accès et le quai
**caractérisé en ce que** un are de rotation (7) de l'élément de basculement est placé directement au niveau de bord de la surface d'accès (2).

2. Dispositif selon revendication 1, pour lequel le moyen de déploiement pneumatique (4, 41, 42, 43) comprend au moins deux vérins souples disposés latéralement sous l'accès au véhicule et longeant chacun idéalement l'accès au véhicule.

3. Dispositif selon une des revendications précédentes, pour lequel l'élément de basculement (3) est une partie rigidifiée du moyen de déploiement pneumatique.

4. Dispositif selon une des revendications précédentes 1 à 3, pour lequel l'élément de basculement (3) comprend au moins un volet muni d'un axe de rotation (7) longeant idéalement l'accès au véhicule.

5. Dispositif selon une des revendications 3 ou 4, pour lequel le moyen de déploiement pneumatique (4, 41, 42, 43) est encastrable dans un boîtier (5) dont l'élément de basculement (3) forme une façade de fermeture ou d'ouverture selon l'état de déploiement.

6. Dispositif selon une des revendications précédentes, pour lequel le moyen de déploiement pneumatique (4, 41, 42, 43) et l'élément de basculement (3) sont intégrés dans ou sont parts d'un module partiellement hermétique, évitant en particulier toute introduction d'élément externes en position rétractée du dispositif.

7. Dispositif selon une des revendications précédentes pour lequel le moyen de déploiement pneumatique (4, 41, 42, 43) et l'élément de basculement (3) sont intégrés dans ou sont parts d'un module hermétique, évitant en particulier toute introduction d'élément externes indépendamment de la position du dispositif.

8. Dispositif selon une des revendications précédentes, pour lequel le moyen de déploiement pneumatique (4, 41, 42, 43) est contrôlé par des électrovannes permettant un gonflage et dégonflage du dit moyen.

9. Dispositif selon une des revendications précédentes pour lequel le moyen de déploiement pneumatique (4, 41, 42, 43) s'étend idéalement sur une longueur supérieure ou égale à 50cm le long de l'accès au véhicule.

10. Dispositif selon une des revendications précédentes pour lequel le moyen déploiement pneumatique (4, 41, 42, 43) permet une réduction de lacune latérale et/ou verticale de quelques centimètres entre le quai (1) et l'accès au véhicule (2).

11. Dispositif selon une des revendications précédentes, pour lequel le moyen déploiement pneumatique (4, 41, 42, 43) est soumis à une pression minimale pour assurer une portance exigée en mode déployé et, pendant le déploiement, à une pression maximale de sécurité contre une blessure par inadvertance, par exemple d'un membre d'une personne entre le quai (1) et le véhicule.

12. Dispositif selon une des revendications précédéntes, pour lequel le moyen déploiement pneumatique (4, 41, 42, 43) est couplé à des capteurs de contrôle de déploiement.

13. Utilisation du dispositif selon une des revendications précédentes comme passerelle d'appoint entre un quai (1) et un véhicule terrestre, naval et/ou aérien au sol tel que par exemple une automobile, une remorque, un camion, un autobus, un wagon ou voiture de train/tramway/métro, un bateau ou un avion.

14. Utilisation selon revendication 10, pour laquelle le véhicule interagit avec un système de guidage du véhicule par rapport au quai (1).

## Claims

1. Device for shortening a gap between a platform (1) and a vehicle comprising an access surface (2) to the platform (1) placed sideways to said vehicle,
pneumatic means of deployment (4, 41, 42, 43), placed under the access surface (2) to the vehicle, interact with a tip-up element (3),
the pneumatic means of deployment (4, 41, 42, 43) comprises at least a supple jack ideally running along the access to the vehicle,
the tip-up element (3), in up position, is used as a footbridge between the access surface and the platform
**characterized in that** an axis of rotation (7) of the tip-up element is placed straight to hedge level of the access surface (2).

2. Device according to claim 1, wherein the pneumatic means f deployment (4, 41, 42, 43) comprise at least two supple jacks placed sideways under the access to the vehicle and each ideally running along the access to the vehicle.

3. Device according to anyone of previous claims, wherein the tip-up element (3) is a rigidified part of the pneumatic means of deployment.

4. Device according to anyone of previous claims 1 to 3, wherein the tip-up element (3) comprises at least one flap having an axis of rotation (7) running ideally along the access to the vehicle.

5. Device according to one of claims 3 or 4, wherein the pneumatic means of deployment (4, 41, 42, 43) are able to fit in a housing (5) whose tip-up element (3) forms a closing or opening wall according to the state of deployment.

6. Device according to anyone of previous claims, wherein the pneumatic means of deployment (4, 41, 42, 43) and the tip-up element (3) are fitting into or are parts of a partially hermetic module, in particular avoiding any insertion of external elements in retracted position of the device.

7. Device according to anyone of previous claims, wherein the pneumatic means of deployment (4, 41, 42, 43) and the tip-up element (3) are fitting into or are parts of a partially hermetic module, in particular avoiding any insertion of external elements independently of the device position.

8. Device according to anyone of previous claims, wherein the pneumatic means of deployment (4, 41, 42, 43) are controlled by solenoid valves enabling a blowing up and letting air out of said means.

9. Device according to anyone of previous claims, wherein the pneumatic means of deployment (4, 41, 42, 43) are stretching ideally over a length greater or equal to 50cm along the access to the vehicle.

10. Device according to anyone of previous claims, wherein the pneumatic means of deployment (4, 41, 42, 43) enable a shortening of lateral and/or vertical gap of a few centimetres between the platform (1) and the access to the vehicle (2).

11. Device according to anyone of previous claims, wherein the pneumatic means of deployment (4, 41, 42, 43) are subjected to a minimal pressure to ensure a required bearing capacity in deployed mode and, during the deployment, to a maximal safety pressure against an injury by mistake, for example of the limb of a person between the platform (1) and the vehicle.

12. Device according to anyone of previous claims, wherein the pneumatic means of deployment (4, 41, 42, 43) are couple with deployment control sensors.

13. Use of the device according to anyone of previous claims as an extra footbridge between a platform (1) and a land, sea and/or air-grounded vehicle such as for example an automobile, a trailer, a truck, a bus, a coach or car of a train/trolley/subway, a boat or a plane.

14. Use of the device according to claim 10, wherein the vehicle interacts with a guiding system of the vehicle in comparison to the platform (1).

## Patentansprüche

1. Vorrichtung zur Verringerung einer Lücke zwischen einem Kai (1) und einem Fahrzeug, das eine Zugangsfläche (2) zum Kai enthält, die seitlich am genannten Fahrzeug angebracht ist,
ein luftbetriebenes Ausfahrmittel (4, 41, 42, 43) unter der Zugangsfläche (2) zum Fahrzeug, das ein Kippelement (3) bewegt, wobei das luftbetriebene Ausfahrmittel (4, 41, 42, 43) mindestens einen elastischen Zylinder enthält, der idealerweise am Fahrzeugzugang entlangläuft, und wobei das Kippelement (3) in gekippter Position als Steg zwischen der Zugangsfläche und dem Kai dient, **gekennzeichnet dadurch, dass** eine Rotationsachse (7) des Kippelements sich direkt auf Höhe des Randes der Zugangsfläche (2) befindet.

2. Vorrichtung nach Anspruch 1, bei der das luftbetriebene Ausfahrmittel (4, 41, 42, 43) mindestens zwei elastische Zylinder enthält, die sich seitlich unter dem Fahrzeugzugang befinden und idealerweise jeweils am Fahrzeugzugang entlanglaufen.

3. Vorrichtung nach einem der vorigen Ansprüche, bei der das Kippelement (3) durch einen Teil des luftbetriebenen Ausfahrmittels aus festem Material gebildet wird.

4. Vorrichtung nach einem der Ansprüche 1 bis 3, bei der das Kippelement (3) mindestens eine Klappe mit einer Rotationsachse (7) enthält, die idealerweise am Fahrzeugzugang entlangläuft.

5. Vorrichtung nach Anspruch 3 oder 4, bei der das luftbetriebene Ausfahrmittel (4, 41, 42, 43) in ein Gehäuse (5) einbaubar ist, dessen Vorderseite durch das ein- oder ausgefahrene Kippelement (3), je nach Zustand, gebildet wird.

6. Vorrichtung nach einem der vorigen Ansprüche, bei der das luftbetriebene Ausfahrmittel (4, 41, 42, 43) und das Kippelement (3) Teil eines teilweise hermetisch geschlossenen Moduls sind oder darin integriert sind, wodurch das Eindringen externer Elemente bei geschlossener Vorrichtung verhindert wird.

7. Vorrichtung nach einem der vorigen Ansprüche, bei der das luftbetriebene Ausfahrmittel (4, 41, 42, 43) und das Kippelement (3) Teil eines hermetisch geschlossenen Moduls sind oder darin integriert sind, wodurch unabhängig vom Zustand der Vorrichtung das Eindringen externer Elemente verhindert wird.

8. Vorrichtung nach einem der vorigen Ansprüche, bei der das luftbetriebene Ausfahrmittel (4, 41, 42, 43) durch Magnetventile gesteuert wird, mit denen im genannten Mittel Luft zu- oder abgeführt wird.

9. Vorrichtung nach einem der vorigen Ansprüche, bei der das luftbetriebene Ausfahrmittel (4, 41, 42, 43) sich idealerweise auf eine Länge von 50 cm oder mehr entlang des Fahrzeugzugangs erstreckt.

10. Vorrichtung nach einem der vorigen Ansprüche, bei der das luftbetriebene Ausfahrmittel (4, 41, 42, 43) eine Verkleinerung der seitlichen bzw. vertikalen Lücke zwischen dem Kai (1) und dem Fahrzeugzugang (2) um mehrere Zentimeter ermöglicht.

11. Vorrichtung nach einem der vorigen Ansprüche, bei der das luftbetriebene Ausfahrmittel (4, 41, 42, 43) einen minimalen Druck aufweist, um eine nötige Tragfähigkeit im ausgefahrenen Zustand zu gewährleisten und während des Ausfahrens aus Sicherheitsgründen einen maximalen Druck aufweist, der gegen eine Verletzung aus Versehen, zum Beispiel einer Gliedmaße einer Person zwischen dem Kai (1) und dem Fahrzeug, schützt.

12. Vorrichtung nach einem der vorigen Ansprüche, bei der das luftbetriebene Ausfahrmittel (4, 41, 42, 43) an Sensoren angeschlossen ist, die das Ausfahren steuern.

13. Verwendung der Vorrichtung nach einem der vorigen Ansprüche als stützenden Steg zwischen einem Kai (1) und einem Landfahrzeug oder einem Wasser- oder Luftfahrzeug am Boden wie beispielsweise einem Auto, einem Anhänger, einem Lkw, einem Bus, einem Zug-/Trambahn-/U-Bahn-Wagen, einem Boot oder einem Flugzeug.

14. Verwendung nach Anspruch 10, bei der das Fahrzeug am Kai (1) mit einem Fahrzeugleitsystem interagiert.
